# FASCICULE DE BREVET EUROPEEN

(11) **EP 1 821 023 B1**
(45) Date de publication et mention de la délivrance du brevet: **25.04.2012**
(21) Numéro de dépôt: 07290201.8
(22) Date de dépôt: 16.02.2007
(51) Int. Cl.: F16L 55/052

(54) **Dispositif réducteur de bruit pour circuit de climatisation de véhicule automobile, et un tel circuit**
Vorrichtung zur Geräuschverminderung für Klimaanlage eines Fahrzeugs
Noise reduction device for air-conditionning for vehicle

(30) Priorité: 20.02.2006 FR 0601450
(43) Date de publication de la demande: 22.08.2007
(73) Titulaire: Hutchinson, 75008 Paris (FR)
(72) Inventeur: Perea, Cyrille, 45290 Pressigny les Pins (FR); Rocafort-Roca, Carles, Llogostena (Gerona) (ES)
(74) Mandataire: Bolinches, Michel Jean-Marie

(56) Documents cités:
- US-A- 2 715 419
- US-A- 3 425 593
- US-A- 3 847 182

## Description

La présente invention concerne un dispositif réducteur de bruit qui est destiné à être monté dans un circuit de climatisation pour véhicule automobile et qui comporte au moins une tubulure, telle qu'une tubulure de remplissage en fluide frigorigène et/ou une tubulure d'accès à une variable de fonctionnement dudit circuit, et un tel circuit de climatisation incorporant ce dispositif.

D'une manière générale, les dispositifs réducteurs de bruit des circuits de climatisation pour véhicules automobiles sont formés de capacités acoustiques qui sont montées en ligne dans les conduites de ces circuits, de sorte à modifier et/ou amortir, via un changement brusque de la section de passage, les ondes sonores générées principalement par le compresseur et se propageant dans le fluide frigorigène à l'intérieur de ces conduites.

On peut par exemple citer le document FR-A-2 772 876 qui divulgue l'association à distance d'une capacité acoustique formant un tel dispositif réducteur de bruit et d'une bouteille allongée, qui est fixée par un col perpendiculairement à une conduite du circuit de climatisation. L'axe de cette bouteille est prévu à une distance de la capacité qui permet l'absorption de fréquences déterminées pour les ondes sonores générées dans le circuit.

On raccorde généralement aux canalisations du circuit des tubulures de remplissage en fluide frigorigène et/ou d'accès à une variable de fonctionnement de ce circuit (par exemple d'accès à la pression interne au circuit).

En variante, on peut rapporter directement de telles tubulures sur les capacités acoustiques formant les dispositifs réducteurs de bruit de ces circuits, avec une interface d'assemblage typiquement obtenue par collage, soudage ou brasage.

Un inconvénient majeur de ces circuits de climatisation connus réside dans les risques de fuites de fluide frigorigène à l'interface d'assemblage de la ou chaque tubulure précitée et du dispositif réducteur de bruit.

Un autre inconvénient connu de ces circuits, dans lesquels la ou chaque tubulure précitée est raccordée à une canalisation, réside dans le risque de dommage mécanique qui résulte de l'opération de raccordement de ladite ou chaque tubulure et qui peut également entraîner des fuites.

Les documents US-A-2 715 419 et US-A-3 847 182 présentent deux types d'accumulateurs hydropneumatiques tous deux formés d'un container globalement cylindrique, dont les deux extrémités sont respectivement destinées à l'introduction d'un gaz et d'un fluide hydraulique, et à l'intérieur duquel est logé un piston flottant dans le premier document et une vessie souple dans le second. Dans le document US-A-2 715 419, le container présente en l'une de ses extrémités une tubulure formée d'un seul tenant formant tubulure de remplissage en gaz pour l'accumulateur.

Un but de la présente invention est de proposer un dispositif réducteur de bruit qui est destiné à être monté dans un circuit de climatisation pour véhicule automobile et qui comporte au moins une tubulure, telle qu'une tubulure de remplissage en fluide frigorigène et/ou une tubulure d'accès à une variable de fonctionnement dudit circuit, qui permette de remédier à ces inconvénients.

A cet effet, un dispositif selon l'invention est tel que ladite ou chaque tubulure est formée d'une manière monobloc avec ledit dispositif en étant dépourvue d'interface d'assemblage avec ce dernier.

On notera que cette structure monobloc (i.e. d'un seul tenant) de ladite ou chaque tubulure et du dispositif réducteur de bruit selon l'invention permet de supprimer tout risque de fuite du fluide frigorigène entre le moyen de remplissage et ledit dispositif, du fait qu'il n'existe pas d'interface d'assemblage entre ces derniers.

Selon une autre caractéristique de l'invention, ladite ou chaque tubulure, qu'elle soit de type tubulure de remplissage (i.e. formant dans ce cas un corps de valve de remplissage) ou de type tubulure d'accès à une variable de fonctionnement dudit circuit (e.g sa pression interne, la tubulure étant dans ce cas destinée à recevoir un capteur de pression), est adaptée pour recevoir un mécanisme de valve dans son espace interne, par des moyens connus en soi.

Avantageusement, ledit dispositif selon l'invention est formé d'une capacité acoustique de paroi sensiblement cylindrique ou prismatique, définie par une première et une seconde bases reliées entre elles par une surface latérale cylindrique ou prismatique.

On notera également que la formation selon l'invention de ladite ou chaque tubulure d'une manière monobloc avec ledit dispositif permet de remédier à l'inconvénient que présenterait le raccordement de la tubulure perpendiculairement à l'axe de la canalisation, soit directement, soit par l'intermédiaire d'une bouteille comme dans le document précité FR-A-2 772 876, raccordement qui engendre des pertes de charge dues au rétrécissement de la section de passage à l'interface correspondante.

On notera en outre que la formation selon l'invention de ladite ou chaque tubulure d'une manière monobloc avec ledit dispositif, qui présente des dimensions plus importantes que celles des canalisations, procure une résistance mécanique accrue aux efforts de raccordement, qui sont principalement axiaux dans le cas d'une tubulure de remplissage en fluide frigorigène et principalement de torsion dans le cas d'une tubulure d'accès à une variable de fonctionnement du circuit (par exemple destinée à recevoir un capteur de pression). De plus, le caractère monobloc du dispositif selon l'invention lui confère une résistance mécanique supplémentaire en comparaison de celle procurée par des raccordements avec interface d'assemblage.

Selon un exemple de réalisation de l'invention, ladite ou l'une desdites tubulure(s) est un corps de valve qui est formé par ladite paroi du dispositif. En variante ou en complément à cet exemple de réalisation, ladite ou une autre desdites tubulure(s) peut être une tubulure d'accès à une variable de fonctionnement dudit circuit, telle qu'une tubulure d'accès à la pression interne audit circuit, ladite tubulure d'accès étant dans ce cas adaptée pour recevoir un capteur de pression.

Selon une autre caractéristique de l'invention, ledit corps de valve et/ou ladite tubulure d'accès forment chacun un goulot monobloc sur une face de ladite paroi en se prolongeant avantageusement par une portion évasée vers le reste de ladite face.

On notera que cette portion évasée contribue à augmenter encore la résistance mécanique aux efforts qui sont appliqués à ladite ou chaque tubulure (que ce soit la tubulure de remplissage et/ou la tubulure d'accès précitée(s)).

De préférence, ledit dispositif selon l'invention définit un volume interne pour ledit fluide frigorigène qui est supérieur à 48 cm³, de telle sorte que ce dispositif est adapté pour réduire efficacement le bruit de fonctionnement d'un circuit de climatisation pour véhicule automobile.

Selon une autre caractéristique de l'invention, ledit dispositif est adapté pour être connecté en communication fluide à au moins deux conduites d'entrée et de sortie dudit fluide frigorigène vis-à-vis dudit dispositif, dont les diamètres sont chacun prévus inférieurs à la plus grande dimension transversale de la capacité acoustique.

Selon un premier mode de réalisation de l'invention, ledit corps de valve et/ou ladite tubulure d'accès sont chacun formés axialement dans ladite première base, deux orifices d'entrée et de sortie dudit fluide frigorigène respectivement destinés à être connectés auxdites conduites étant tous deux formés dans ladite seconde base de part et d'autre de l'axe de révolution de ladite surface latérale cylindrique.

Conformément à ce premier mode, ledit dispositif selon l'invention peut être avantageusement obtenu par filage d'un matériau métallique, tel qu'un matériau à base d'aluminium, de sorte à former ledit corps de valve et/ou ladite tubulure d'accès d'un seul tenant et sans interface d'assemblage avec le reste dudit dispositif.

Avantageusement en relation avec ce procédé de façonnage par filage, ladite portion évasée qui fait déboucher ledit goulot monobloc sur ladite face correspondante du dispositif présente une surface sensiblement en forme d'hyperboloïde de révolution (i.e. dont la face externe est continûment concave).

Selon un second mode de réalisation de l'invention, ladite ou chaque tubulure est formée radialement sur ladite surface latérale cylindrique, deux orifices d'entrée et de sortie dudit fluide frigorigène destinés à être connectés auxdites conduites étant respectivement formés dans lesdites première et seconde bases en étant chacun centrés sur l'axe de révolution de ladite surface.

Conformément à ce second mode, ledit dispositif selon l'invention peut être avantageusement obtenu par hydroformage d'un matériau métallique, tel qu'un matériau à base d'aluminium, de sorte à former ladite ou chaque tubulure d'un seul tenant et sans interface d'assemblage avec le reste dudit dispositif.

On notera que lesdits orifices d'entrée et de sortie pour le fluide frigorigène qui sont prévus dans le dispositif réducteur de bruit selon l'invention pourraient avantageusement présenter chacun un bord saillant vers l'extérieur du dispositif et formant ainsi un tronçon de la conduite correspondante précitée, lequel tronçon serait adapté pour recevoir le reste de ladite conduite par des moyens de solidarisation appropriés.

On notera également que tout ou partie dudit dispositif selon l'invention, tant selon ledit premier que selon ledit second modes, pourrait être constitué en variante d'un matériau non métallique, tel qu'un matériau plastique adapté pour résister aux contraintes de fonctionnement inhérentes à un circuit de climatisation pour véhicule automobile utilisant un fluide frigorigène sous pression.

Un circuit de climatisation pour véhicule automobile selon l'invention est du type comportant des conduites destinées à véhiculer un fluide frigorigène sous pression, tel que du « R134a » ou du dioxyde de carbone, à titre non limitatif, et ce circuit comporte au moins un dispositif réducteur de bruit tel que défini ci-dessus qui est en communication fluide avec deux au moins desdites conduites.

D'autres caractéristiques, avantages et détails de la présente invention ressortiront à la lecture de la description suivante d'un exemple de réalisation de l'invention, donné à titre illustratif et non limitatif, ladite description étant réalisée en référence avec le dessin joint, dans lequel :
la figure 1 est une vue en coupe selon le plan I-I de la figure 2 d'un dispositif réducteur de bruit à tubulure intégrée formant dans cet exemple un corps de valve de remplissage, selon un mode particulier de réalisation de l'invention,
la figure 2 est une vue de dessous du dispositif illustré à la figure 1,
la figure 3 est une vue en coupe d'un détail de la figure 1 illustrant un exemple de réalisation d'un mécanisme de valve logé dans le corps de valve visible à la figure 1,
la figure 4 est une vue de détail en coupe d'une variante de réalisation de la figure 3, montrant une tubulure d'accès adaptée pour recevoir un capteur de pression, et
la figure 5 est une vue en coupe illustrant l'assemblage de la tubulure d'accès et de ce capteur de pression.

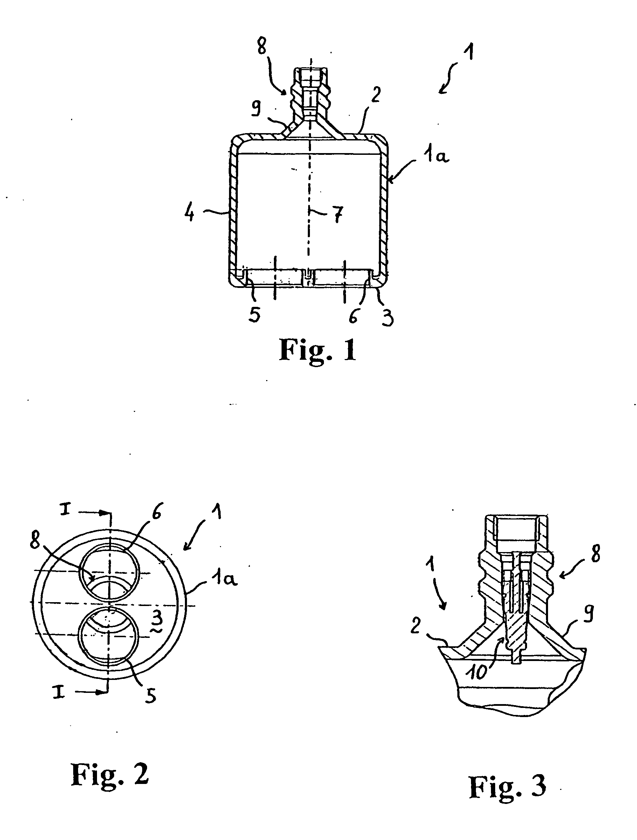

Le dispositif réducteur de bruit 1 illustré aux figures 1 et 2 est formé d'une capacité acoustique en aluminium de forme sensiblement cylindrique, i.e. à paroi 1a définissant deux bases supérieure 2 et inférieure 3 reliées entre elles par une surface cylindrique 4, et ce dispositif 1 est spécifiquement destiné à être incorporé à un circuit de climatisation pour véhicule automobile.

A cet effet, le dispositif 1 comporte deux orifices traversants 5 et 6 d'entrée et de sortie qui sont destinés à permettre la circulation d'un fluide frigorigène, par exemple du « R134a » ou du dioxyde de carbone, dans la tuyauterie adjacente, via deux conduites (non illustrées) qui sont connectées aux bords respectifs de ces orifices 5 et 6.

Dans l'exemple de réalisation des figures 1 et 2, chaque orifice 5, 6 est formé dans la base inférieure 3 du dispositif 1, de part et d'autre de l'axe de révolution 7 de la surface cylindrique 4. Comme cela est visible sur ces figures, le diamètre de chaque orifice 5, 6 est prévu inférieur au rayon de cette base 3.

Selon la présente invention, la paroi 1 a de ce dispositif 1 forme d'une manière monobloc (i.e. intrinsèquement) une tubulure formant, dans l'exemple des figures 1 et 2, un corps de valve 8 définissant un goulot de remplissage en fluide frigorigène et, dans le mode de réalisation des figures 1 et 2, ce corps de valve 8 est formé de préférence en un emplacement central de la base supérieure 2 du dispositif 1. Plus précisément, le corps de valve 8 est adapté pour recevoir un mécanisme de valve 10 (voir figure 3) et il présente une paroi sensiblement cylindrique qui est reliée à la base supérieure 2 via une portion 9 évasée vers le bas débouchant à l'intérieur du dispositif 1, et qui est centrée sur l'axe de révolution 7.

Bien que la portion évasée 9 présente, dans l'exemple de la figure 1, une géométrie tronconique, on notera qu'elle peut avantageusement présenter, en variante, une géométrie sensiblement en forme d'hyperboloïde de révolution, i.e. avec une face extérieure continûment concave jusqu'à la base supérieure 2.

Le mécanisme de valve 10 qui est illustré à titre exemplatif et nullement limitatif à la figure 3 est monté à l'intérieur de la tubulure formant le corps de valve 8 par des moyens appropriés et, dans cet exemple de réalisation, il est de type mécanisme de valve pour chambre à air de pneumatique.

On notera que tout autre mécanisme de valve connu est utilisable dans un dispositif 1 selon la présente invention, tel qu'un mécanisme commercialisé par exemple par les sociétés Ventrex, Schraeder ou Pacific.

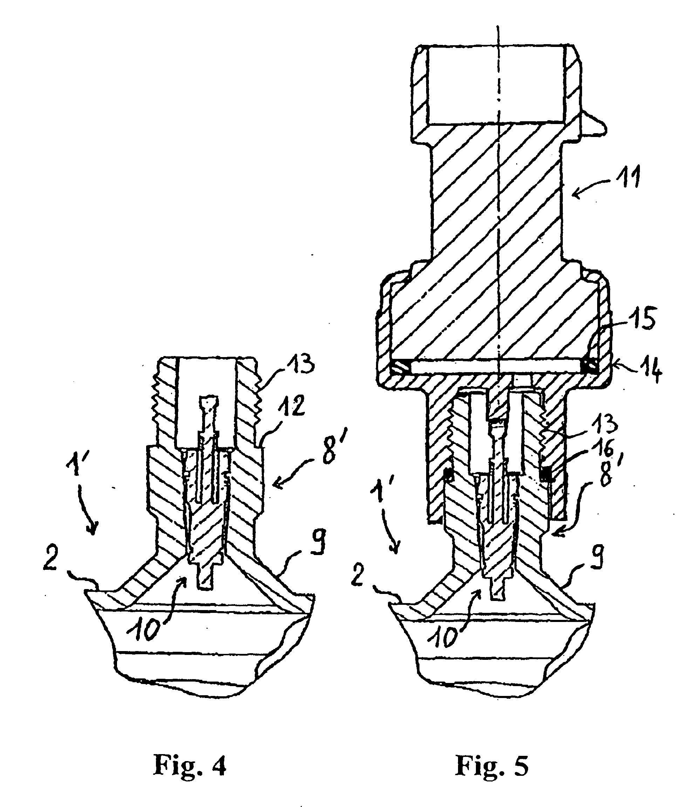

Le dispositif 1' illustré à la figure 4 se différencie de celui de la figure 3 en ce qu'il comporte, à titre de tubulure formée d'un seul tenant avec la base supérieure 2 du dispositif 1', une tubulure d'accès 8' destinée à recevoir un organe de mesure d'une variable interne de fonctionnement du circuit de climatisation, tel qu'un capteur de pression 11 (voir figure 5). Cette tubulure d'accès 8' comporte, de façon connue en soi, un épaulement 12 destiné à coopérer avec le capteur 11 et, axialement au-dessus de cet épaulement 12, un filetage 13 pour la solidarisation du capteur 11 avec la tubulure 8'.

La figure 5 montre le dispositif 1' de la figure 4 qui est par exemple pourvu du capteur de pression 11, à titre d'organe de mesure. Un tel capteur 11, largement connu en soi, ne fera pas l'objet ici d'une description détaillée. On pourra par exemple utiliser des capteurs de pression 11 tels que ceux commercialisés par les sociétés BITRON ou TEXAS INSTRUMENTS. Comme illustré à la figure 5, le capteur de pression 11 est pourvu d'une embase 14 de fixation qui reçoit le capteur 11, par exemple par sertissage. Deux joints toriques d'étanchéité 15 et 16 sont respectivement insérés entre l'embase 14 et le capteur 11, et sur l'épaulement 12 entre l'embase 14 et la tubulure d'accès 8'.

On notera que les dispositifs 1, 1' selon l'invention pourraient intégrer une ou plusieurs tubulure(s) 8, 8' de manière non centrée sur leur base supérieure 2, notamment dans le cas d'un dispositif comportant à la fois une tubulure de remplissage formant corps de valve 8 et une tubulure d'accès 8' destinée à recevoir un capteur de pression 11.

Les dispositifs 1, 1' selon l'invention intégrant sur leur base supérieure 2 la ou chaque tubulure 8, 8' sont avantageusement obtenus par un procédé de filage, i.e. par un formage consistant essentiellement en un écoulement de l'aluminium au travers d'une filière ayant pour section le profil à obtenir, de type sensiblement cylindrique surmonté d'un goulot.

Le circuit de climatisation pour véhicule automobile incorporant ce dispositif 1, 1' réducteur de bruit selon l'invention peut fonctionner dans les plages usuelles de température et de pression relatives au fluide frigorigène utilisé, i.e. par exemple à des pressions allant sensiblement de 2 bars à 25 bars pour le « R134a » et allant de plusieurs dizaines de bars à environ 150 bars pour le dioxyde de carbone.

## Revendications

1. Dispositif réducteur de bruit (1, 1') pour circuit de climatisation de véhicule automobile, le dispositif comportant au moins une tubulure de remplissage (8) en fluide frigorigène et/ou une tubulure d'accès (8') à une variable de fonctionnement dudit circuit, **caractérisé en ce que** ladite ou chaque tubulure est formée d'une manière monobloc avec ledit dispositif en étant dépourvue d'interface d'assemblage avec ce dernier, le dispositif comportant, outre ladite ou chaque tubulure, deux orifices d'entrée/sortie (5,6) du fluide frigorigène dans/de ce dispositif qui sont respectivement destinés à être connectés à deux conduites du circuit pour permettre la circulation du fluide.

2. Dispositif (1, 1') selon la revendication 1, **caractérisé en ce qu'**il est formé d'une capacité acoustique de paroi (1a) sensiblement cylindrique, définie par une première et une seconde bases (2 et 3) reliées entre elles par une surface latérale cylindrique (4).

3. Dispositif (1) selon la revendication 2, **caractérisé en ce que** ladite ou l'une desdites tubulure(s) (8, 8') est un corps de valve (8) qui est formé par ladite paroi (1 a).

4. Dispositif (1') selon la revendication 2 ou 3, **caractérisé en ce que** ladite ou une autre desdites tubulure(s) (8, 8') est une tubulure d'accès (8') à la pression interne audit circuit, ladite tubulure d'accès étant destinée à recevoir un capteur de pression.

5. Dispositif (1, 1') selon la revendication 3 ou 4, **caractérisé en ce que** ledit corps de valve (8) et/ou ladite tubulure d'accès (8') forment chacun un goulot monobloc sur une face (2) de ladite paroi (1a) en se prolongeant par une portion évasée (9) vers le reste de ladite face.

6. Dispositif (1, 1') selon une des revendications 2-5, **caractérisé en ce que** ledit corps de valve (8) et/ou ladite tubulure d'accès (8') sont chacun formés axialement dans ladite première base (2), lesdits orifices d'entrée et de sortie (5 et 6) dudit fluide frigorigène étant tous deux formés dans ladite seconde base (3) de part et d'autre de l'axe de révolution (7) de ladite surface latérale cylindrique (4).

7. Dispositif selon la revendication 3, **caractérisé en ce que** ladite ou chaque tubulure est formée radialement sur ladite surface latérale cylindrique (4), lesdits orifices d'entrée et de sortie dudit fluide frigorigène étant respectivement formés dans lesdites première et seconde bases (2 et 3) en étant chacun centrés sur l'axe de révolution (7) de ladite surface.

8. Dispositif (1, 1') selon la revendication 6, **caractérisé en ce qu'**il est obtenu par filage d'un matériau métallique, tel qu'un matériau à base d'aluminium, de sorte à former ledit corps de valve (8) et/ou ladite tubulure d'accès (8') d'un seul tenant et sans interface d'assemblage avec le reste dudit dispositif.

9. Dispositif (1, 1') selon les revendications 5 et 8, **caractérisé en ce que** ladite portion évasée (9) présente une surface sensiblement en forme d'hyperboloïde de révolution.

10. Dispositif selon la revendication 7, **caractérisé en ce qu'**il est obtenu par hydroformage d'un matériau métallique, tel qu'un matériau à base d'aluminium, de sorte à former ladite ou chaque tubulure d'un seul tenant et sans interface d'assemblage avec le reste dudit dispositif.

11. Dispositif (1, 1') selon une des revendications précédentes, **caractérisé en ce qu'**il définit un volume interne pour ledit fluide frigorigène qui est supérieur à 48 cm³.

12. Circuit de climatisation pour véhicule automobile, du type comportant des conduites destinées à véhiculer un fluide frigorigène sous pression, tel que du « R134a » ou du dioxyde de carbone, et au moins un dispositif réducteur de bruit (1, 1') en communication fluide avec deux au moins desdites conduites, **caractérisé en ce que** ledit ou l'un au moins dudit (desdits) dispositif(s) est tel que défini à l'une des revendications précédentes.

## Claims

1. Noise reduction device (1, 1') for an air-conditioning circuit of a motor vehicle, the device comprising at least one filling tube (8) for filling up with coolant fluid and/or an access tube (8') for access to an operating variable of said circuit, **characterised in that** said or each tube is formed in one piece with the said device, having no assembly interface with the latter, the device comprising, in addition to said or each tube, two inlet/outlet orifices (5, 6) for coolant fluid into or out of the device, which are respectively intended to be connected to two ducts in the circuit to enable the fluid to circulate.

2. Device (1, 1') according to claim 1, **characterised in that** it is formed by an acoustic volume with a substantially cylindrical wall (1 a), defined by a first and a second base (2 and 3) joined to each other by a cylindrical lateral surface (4).

3. Device (1) according to claim 2, **characterised in that** the said tube or one of the said tubes (8, 8') is a valve body (8) which is formed by said wall (1a).

4. Device (1') according to claim 2 or 3, **characterised in that** the said tube or another of said tubes (8, 8') is an access tube (8') to the internal pressure within said circuit, the said access tube being intended to receive a pressure sensor.

5. Device (1, 1') according to claim 3 or 4, **characterised in that** the said valve body (8) and/or the said access tube (8') each form a one-piece neck on one side surface (2) of said wall (1 a), extending by means of a flared portion (9) towards the rest of said side surface.

6. Device (1, 1') according to one of claims 2 to 5, **characterised in that** the said valve body (8) and/or the said access tube (8') are each formed axially within said first base (2), the said inlet and outlet orifices (5 and 6) for said coolant fluid both being formed in said second base (3) on either side of the axis of revolution (7) of said cylindrical lateral surface (4).

7. Device according to claim 3, **characterised in that** said or each tube is formed radially on said cylindrical lateral surface (4), the said inlet and outlet orifices for said coolant fluid being formed respectively in said first and second bases (2 and 3), each being centred on the axis of revolution (7) of said surface.

8. Device (1, 1') according to claim 6, **characterised in that** it is obtained by drawing a metallic material, such as an aluminium-based material, so as to form the said valve body (8) and/or the said access tube (8') in one piece and with no assembly interface with the remainder of the device.

9. Device (1, 1') according to claims 5 and 8, **characterised in that** the said flared portion (9) has a surface substantially in the shape of a hyperboloid of revolution.

10. Device according to claim 7, **characterised in that** it is obtained by hydroforming of a metallic material, such as an aluminium-based material, so as to form the or each tube in one piece and with no assembly interface with the remainder of the device.

11. Device (1, 1') according to one of the preceding claims, **characterised in that** it defines an internal volume for the said coolant fluid which is greater than 48 cm³.

12. Air-conditioning circuit for a motor vehicle, of the type comprising ducts intended to carry a coolant fluid under pressure, such as "R134a" or carbon dioxide, and at least one noise reduction device (1, 1') in fluidic communication with at least two of said ducts, **characterised in that** said or at least one of the said device(s) is as defined in one of the preceding claims.

## Patentansprüche

1. Vorrichtung (1, 1') zur Geräuschverminderung für eine Klimaanlage eines Kraftfahrzeugs, wobei die Vorrichtung zumindest einen Auffüllstutzen (8) für kälteerzeugendes Fluid und/oder eine Stutzen (8') zum Zugang zu einer Betriebsvariable der Klimaanlage aufweist, **dadurch gekennzeichnet, dass** der oder jeder Stutzen in einstückiger Art mit der Vorrichtung ausgebildet ist, ohne dass bei diesem eine Zusammenbaugrenzfläche mit letztgenannter vorgesehen ist, wobei die Vorrichtung außer dem oder jedem Stutzen zwei Eingangs/Ausgangsöffnungen (5, 6) des kälteerzeugenden Fluids in/aus der Vorrichtung aufweist, die jeweils dazu bestimmt sind, mit zwei Leitungen des Kreises verbunden zu sein, um einen Umlauf des Fluids zu gestatten.

2. Vorrichtung (1, 1') nach Anspruch 1, **dadurch gekennzeichnet, dass** diese von einem akustischen Volumen (1a) mit im Wesentlichen zylindrischen Wand gebildet ist, die durch ein erstes und ein zweites Grundbauteil (2 und 3) definiert ist, die durch eine zylindrische Seitenfläche (4) miteinander verbunden sind.

3. Vorrichtung (1) nach Anspruch 2, **dadurch gekennzeichnet, dass** der oder einer der Stutzen (8, 8') ein Ventilkörper (8) ist, der durch die Wand (1 a) gebildet ist.

4. Vorrichtung (1') nach Anspruch 2 oder 3, **dadurch gekennzeichnet, dass** der oder ein weiterer der Stutzen (8, 8') ein Zugangsstutzen (8') zum Innendruck zu der Klimaanlage ist, wobei der Zugangsstutzen dazu bestimmt ist, einen Drucksensor aufzunehmen.

5. Vorrichtung (1, 1') nach Anspruch 3 oder 4, **dadurch gekennzeichnet, dass** der Ventilkörper (8) und/oder der Zugangsstutzen (8') jeweils einen einstückigen Hals an der Fläche (2) der Wand (1 a) bildet/bilden, wobei sich dieser in einem erweiterten Abschnitt (9) zur verbleibenden Fläche hin fortsetzt.

6. Vorrichtung (1, 1') nach einer der Ansprüche 2 bis 5, **dadurch gekennzeichnet, dass** der Ventilkörper (8) und/oder der Zugangsstutzen (8') jeweils axial in dem ersten Grundbauteil (2) ausgebildet ist/sind, wobei die Eingangs- und Ausgangsöffnungen (5, 6) des kälteerzeugenden Fluids alle beide in dem zweiten Grundbauteil (3) zu beiden Seiten der Drehachse (7) der zylindrischen Seitenfläche (4) ausgebildet sind.

7. Vorrichtung nach Anspruch 3, **dadurch gekennzeichnet, dass** der oder jeder Stutzen an der zylindrischen Seitenfläche (4) radial ausgebildet ist, wobei die Eingangs- und Ausgangsöffnungen des kälteerzeugenden Fluids in dem ersten und zweiten Grundelement (2 und 3) jeweils ausgebildet sind, wobei jede auf der Drehachse (7) der Fläche zentriert ist.

8. Vorrichtung (1, 1') nach Anspruch 6, **dadurch gekennzeichnet, dass** diese durch Fließpressen eines Metallmaterials, wie z.B. eines Materials auf der Grundlage von Aluminium, in der Weise erhalten wird, dass der Ventilkörper (8) und /oder der Zugangsstutzen (8) aus einem einzigen Träger und ohne Zusammenbaugrenzfläche mit der verbleibenden Vorrichtung ausgebildet wird.

9. Vorrichtung (1, 1') nach den Ansprüchen 5 und 8, **dadurch gekennzeichnet, dass** der Erweiterungsabschnitt (9) eine Fläche im Wesentlichen in Form eines Rotationshyperboloids aufweist.

10. Vorrichtung nach Anspruch 7, **dadurch gekennzeichnet, dass** diese durch das Hydroformen eines Metallmaterials, wie z.B. eines Materials auf der Grundlage von Aluminium, in der Weise erhalten wird, dass der oder jeder Stutzen aus einem einzigen Träger und ohne Zusammenbaugrenzfläche mit der verbleibenden Vorrichtung ausgebildet wird.

11. Vorrichtung (1, 1') nach einem der vorhergehenden Ansprüche, **dadurch gekennzeichnet, dass** diese ein Innenvolumen für das kälteerzeugende Fluid definiert, das größer als 48cm³ ist.

12. Klimaanlage für ein Kraftfahrzeug von der Art, die aufweist: Leitungen, die dazu bestimmt sind, ein kälteerzeugendes Fluid unter Druck, wie z.B. "R134a" oder Kohlendioxid, zu transportieren, und zumindest eine Vorrichtung (1, 1') zur Geräuschverminderung in Fluidverbindung mit zumindest zwei der Leitungen, **dadurch gekennzeichnet, dass** die Vorrichtung oder zumindest eine der Vorrichtungen derart ausgestaltet ist, wie es in einem der vorhergehenden Ansprüche definiert ist.
